# EUROPÄISCHE PATENTSCHRIFT

(11) **EP 2 753 880 B1**
(45) Veröffentlichungstag und Bekanntmachung des Hinweises auf die Patenterteilung: **09.03.2016**
(21) Anmeldenummer: 12753489.9
(22) Anmeldetag: 03.09.2012
(51) Int. Cl.: F16L 55/053, F16L 55/033, F24D 3/10

(54) **MEMBRANDRUCKAUSDEHNUNGSGEFÄSS**
DIAPHRAGM PRESSURE EXPANSION VESSEL
VASE D'EXPANSION À MEMBRANE

(30) Priorität: 10.09.2011 DE 102011113028
(43) Veröffentlichungstag der Anmeldung: 16.07.2014
(73) Patentinhaber: Winkelmann Sp. z o.o., 59220 Legnica (PL)
(72) Erfinder: MÜLLER, Frank, 59227 Ahlen (DE); SCHMITZ, Egon, 04105 Leipzig (DE); ÜNAL, Besim, 59229 Ahlen (DE)
(74) Vertreter: Meinke, Dabringhaus und Partner GbR
(86) Internationale Anmeldenummer: PCT/EP2012/067052
(87) Internationale Veröffentlichungsnummer: WO 2013/034508

(56) Entgegenhaltungen:
- EP-A1- 2 175 205
- DE-U1- 29 517 530
- GB-A- 1 200 515

## Beschreibung

Die Erfindung betrifft ein Membrandruckausdehnungsgefäß zum Anschließen an ein Leitungsnetz mit zwei Gefäßteilen, die in einem umfänglichen Verbindungsbereich druck- und fluiddicht miteinander verbunden sind, wobei der von den beiden Gefäßteilen gebildete geschlossene Gefäßinnenraum von einer Membran in einen Wasserraum und einen Gasraum getrennt ist, wobei der Wasserraum über einen Anschlussstutzen mit dem Leitungsnetz verbindbar ist, wobei die Membran aus einem wenigstens einschichtigen Kunststoff gebildet und blasenförmig ausgebildet ist.

Derartige Ausdehnungsgefäße mit Membranen dienen zur Aufnahme von Volumenänderungen, beispielsweise durch druckabhängiges Ein- und Ausschalten von Pumpen, durch Druckschlagdämpfer oder auch temperaturbedingt in geschlossenen Flüssigkeitskreisläufen, wie in Heizungskreisläufen oder Wasserversorgungssystemen, auftreten.

Im Wesentlichen werden zwei unterschiedliche Ausdehnungsgefäßtypen unterschieden, nämlich Gefäße mit zwei Gefäßteilen und einer flachen bzw. halbschalenförmigen Membran sowie Gefäße mit einer blasenförmigen Membran, die mit ihrem Öffnungsrand in den Wasseranschlussstutzen des Ausdehnungsgefäßes eingesetzt ist und den Wasserraum bildet. Alternativ kann die Membran auch den Gasraum bilden.

Bei Ausdehnungsgefäßen mit flacher bzw. halbschalenförmiger Membran gibt es unterschiedliche Gefäßformen, wobei in erster Linie zwischen Flachgefäßen, die z.B. in Wandheizthermen eingesetzt werden, und zylindrischen bzw. kugelartigen Gefäßen unterschieden wird. Diesen beiden Gefäßtypen ist gemeinsam, dass der Gefäßinnenraum durch eine flache bzw. halbschalenförmige Membran vorzugsweise aus einem Elastomer in einen Wasser- und einen Gasraum unterteilt wird, wobei die Membran gleichzeitig als Abdichtelement zwischen den beiden Gefäßteilen dienen kann. Eine solche Lösung ist z.B. in DE-A 28 14 162 dargestellt. Von wesentlichem Nachteil bei diesen seit langem bewährten Ausdehnungsgefäßen ist vor allem, dass sich bei Membranen aus einem elastomeren Material, insbesondere über eine lange Zeitdauer, ein gewisser Permeationseffekt nicht vermeiden lässt, so dass aus dem Gasraum Gas in den Wasserraum und damit in das Leitungsnetz eindringen kann, was insbesondere bei Heizungskreisläufen ünerwünscht ist. Dadurch verringert sich auch das Gasvolumen im Gasraum, was eine Wartung erforderlich macht, da eine Nachbefüllung notwendig ist. Dies ist mit entsprechendem Aufwand verbunden. Ferner ist von Nachteil, dass Membranen aus Elastomeren relativ teuer sind.

Aus EP 2 175 205 A1 ist ein gattungsgemäßes Ausdehnungsgefäß bekannt, bei welchem die Membran nicht aus einem Elastomer, sondern aus einem wenigstens einschichtigen elastischen gasdurchlässigen Kunststoff verwendet wird.

In der Praxis hat sich herausgestellt, dass bei einer derartigen Kunststoffmembran, insbesondere bei Verwendung in einem Flachgefäß vor allem mit rechteckiger Ausführung eine Bruchgefahr durch die Wechselbelastung insbesondere in den Eckbereichen besteht, so dass vor allem für solche Gefäßtypen eine Kunststoffmembran bisher nicht mit zufriedenstellendem Erfolg eingesetzt werden kann.

Aufgabe der Erfindung ist es, ein gattungsgemäßes Membrandruckausdehnungsgefäß so weiterzuentwickeln, dass die Bruchgefahr für die Kunststoffmembran bei Wechselbelastung deutlich verringert wird.

Diese Aufgabe wird bei einem Membrandruckausdehnungsgefäß der eingangs bezeichneten Art erfindungsgemäß dadurch gelöst, dass der Gasraum vom Membraninnenraum und vom Gefäßinnenraum zwischen der dem Wasserraum abgewandten Seite der Membran und dem angrenzenden Gefäßteil gebildet wird, wobei die dem Wasserraum abgewandte Seite der Membran mit Perforierungen versehen ist.

Aufgrund dieser Gestaltung ist es möglich, die stark belastete Membranseite sozusagen abzustützen bzw. zu entlasten und dadurch eine größere Stabilität zu erlangen. Dazu ist die blasenförmige Membran auf der Gasseite perforiert, so dass der Gasraum sowohl aus dem Rauminhalt zwischen dem entsprechenden Gefäßteil und der Membran als auch dem Rauminhalt der blasenförmigen Membran besteht. Die blasenförmige Membran ist dementsprechend so im Membrandruckausdehnungsgefäß eingebaut, wie dies ansonsten bei Flachmembranen der Fall ist und sie ist zusätzlich auf der Gasseite mit Perforationen versehen. Es hat sich herausgestellt, dass sich dadurch die Membranseite, an der der Wasserdruck ansteht, an der rückwärtigen Membranseite abstützen kann, es kommt offensichtlich zu einem Puffereffekt in der blasenförmigen Membran, welche die Wechselbelastung der Membran abfedert und die Bruchgefahr deutlich reduziert oder sogar ausschließt.

Dabei ist bevorzugt vorgesehen, dass die Membran im umfänglichen Verbindungsbereich zwischen den beiden Gefäßteilen gasdicht eingebunden ist. Dazu ist bevorzugt im umfänglichen Verbindungsbereich ein Dichtelement vorgesehen, welches von einen umlaufenden Dichtrand der Membran gebildet sein kann. Bei entsprechender Gestaltung des umfänglichen Membranrandes kann die Membran somit selbst als Dichtelement zwischen den beiden Gefäßteilen dienen. Dies schließt natürlich eine zusätzliche Dichtung zwischen den Gefäßteilen nicht aus, die Membran muss auch nicht direkt zwischen den beiden Gefäßteilen eingespannt sein, sondern sie kann auch nur gasdicht an einem Gefäßteil umlaufend befestigt sein.

Weiterhin ist bevorzugt vorgesehen, dass die Membran auf der dem Wasserraum zugewandten Seite eine Kontur aufweist, die an die Kontur des den Wasserraum begrenzenden Gefäßteiles angepasst ist. Im Ruhezustand liegt dann die Membran an der Innenwandung des den Wasserraum begrenzenden Gefäßteiles an, das Volumen des Wasserraumes ist somit vernachlässigbar und es gibt praktisch keine Totraumzone, das volle Innenvolumen des Ausdehnungsgefäßes ist vom Gasraum ausgefüllt, das mit einem unter vorgegebenen Überdruck stehenden Gas befüllt ist.
Die erfindungsgemäße Gestaltung des Membrandruckausdehnungsgefäßes ist insbesondere vorteilhaft, wenn das Gefäß in an sich bekannter Weise als Flachgefäß, vorzugsweise als rechteckförmiges Flachgefäß, ausgebildet ist. Solche Gefäße werden insbesondere in Wandheizthermen verwandt.

Die Erfindung ist nachstehend anhand der Zeichnung beispielhaft näher erläutert. Diese zeigt jeweils im Schnitt in:
- Fig. 1: ein Membrandruckausdehnungsgefäß mit vollständig ausgedehnter Membran und
- Fig. 2: das Membrandruckausdehnungsgefäß nach Fig. 1 mit teilweise zusammengestülptem Rahmen.

Ein Membrandruckausdehnungsgefäß ist allgemein mit 1 bezeichnet. Dieses Membrandruckausdehnungsgefäß 1 ist beim Ausführungsbeispiel als vorzugsweise rechteckförmiges Flachgefäß ausgebildet und z.B. zum Einsetzen in eine Wandtherme geeignet. Es kann aber auch eine andere geometrische Gestaltung (z. B. rund, zylindrisch, kugelförmig) aufweisen, wenn es z.B. in Verbindung mit einem Heizkessel eingesetzt wird.

Das Membrandruckausdehnungsgefäß 1 weist zwei halbschalenförmige Gefäßteile 2, 3 auf, welche vorzugsweise aus Metall bestehen. Diese beiden Gefäßteile 2, 3 sind in einem mit 4 bezeichneten umfänglichen Verbindungsbereich gasdicht miteinander verbunden.

Im Gefäßinnenraum ist eine blasenförmige Membran 5 aus Kunststoff, z.B. aus Polypropylen, die ggf. mit einer EVOH-Beschichtung versehen sein kann, angeordnet, welche umlaufend im umfänglichen Verbindungsbereich 4 zwischen den beiden Gefäßteilen 2, 3 gasdicht eingebunden ist. Dazu weist die Membran beim Ausführungsbeispiel einen einstückigen umlaufenden Dichtrand 5a auf. Alternativ kann auch z.B. ein zusätzliches ringförmiges Dichtelement vorgesehen sein.

Die Membran 5 trennt den Innenraum des Membrandruckausdehnungsgefäßes 1 in einen Wasserraum 6 und einen nachfolgend näher beschriebenen Gasraum, wobei der Wasserraum 6 über einen Anschlussstutzen 7 mit einem nicht dargestellten Leitungsnetz verbindbar ist.

Wesentlich ist nun, dass die Membran 5 auf der dem Wasserraum 6 abgewandten Seite mit Perforierungen 8 versehen ist. Durch diese Perforierungen 8 sind der mit 9 bezeichnete Membraninnenraum und der zwischen dem angrenzenden Gefäßteil 2 und der dem Wasserraum 6 abgewandten Seite der Membran 5 gebildete Gefäßinnenraum 10 miteinander verbunden, wobei über ein Gasfüllventil 11 sowohl der Membraninnenraum 9 als auch der Gefäßinnenraum 10 mit einem Gas, z.B. Stickstoff, gefüllt ist, d.h. der Gasraum des Membrandruckausdehnungsgefäßes wird vom Membraninnenraum 9 und dem Gefäßinnenraum 10 gebildet.

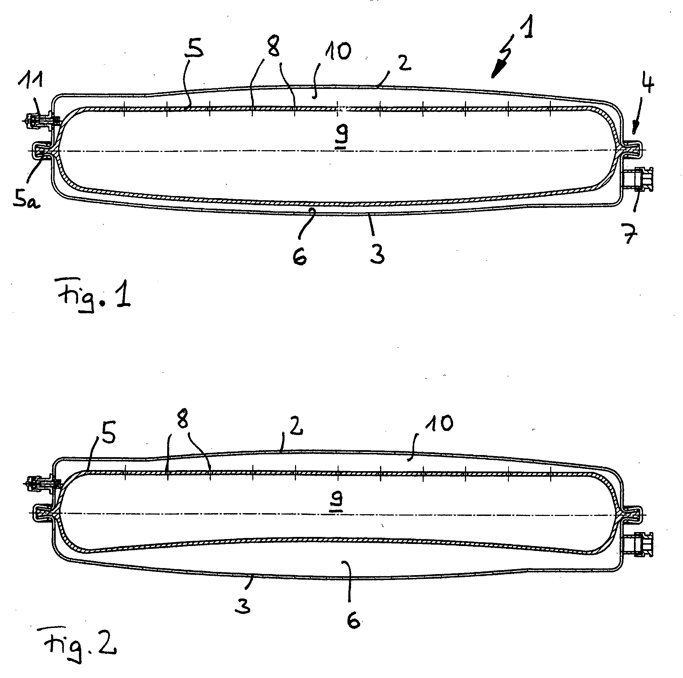

Wie am besten aus Fig. 1 hervorgeht, ist die Membran 5 auf der dem Wasserraum 6 zugewandten Seite an die Kontur des den Wasserraum 6 begrenzenden Gefäßteiles angepasst. Tritt nun vom Ruhezustand gemäß Fig. 1 durch den Wasseranschlussstutzen 7 aus dem Leitungsnetz Wasser in den Wasserraum 6 ein (Fig. 2), stülpt sich die Membran mehr oder weniger leicht auf der dem Wasserraum 6 zugewandten Seite nach innen, dieser Umstülpvorgang wird durch das Gasvolumen abgepuffert und die Membran stützt sich sozusagen an Ihrer Rückseite ab. Dadurch wird die sonst bei Kunststoffmembranen, insbesondere in den Eckbereichen bestehende Bruchgefahr wesentlich reduziert oder sogar vollständig vermieden.

### Bezugszeichenliste:

- 1: Membrandruckausdehnungsgefäß
- 2, 3: halbschalenförmige Gefäßteile
- 4: umfänglicher Verbindungsbereich
- 5: Membran
- 5a: Dichtrand der Membran
- 6: Wasserraum
- 7: Anschlussstutzen
- 8: Perforierungen
- 9: Membraninnenraum
- 10: Gefäßinnenraum
- 11: Gasfüllventil

## Patentansprüche

1. Membrandruckausdehnungsgefäß (1) zum Anschließen an ein Leitungsnetz mit zwei Gefäßteilen (2, 3), die in einem umfänglichen Verbindungsbereich (4) druck-und fluiddicht miteinander verbunden sind, wobei der von den beiden Gefäßteilen (2, 3) gebildete geschlossene Gefäßinnenraum (10) von einer Membran (5) in einen Wasserraum (6) und einen Gasraum getrennt ist, wobei der Wasserraum (6) über einen Anschlussstutzen (7) mit dem Leitungsnetz verbindbar ist, wobei die Membran (5) aus einem wenigstens einschichtigen Kunststoff gebildet und blasenförmig ausgebildet ist,
**dadurch gekennzeichnet,**
**dass** der Gasraum vom Membraninnenraum (9) und vom Gefäßinnenraum (10) zwischen der dem Wasserraum (6) abgewandten Seite der Membran (5) und dem angrenzenden Gefäßteil (2) gebildet ist, wobei die dem Wasserraum (6) abgewandte Seite der Membran (5) mit Perforierungen (8) versehen ist.

2. Membrandruckausdehnungsgefäß nach Anspruch 1,
**dadurch gekennzeichnet,**
**dass** die Membran (5) im umfänglichen Verbindungsbereich (4) zwischen den beiden Gefäßteilen (2, 3) gasdicht eingebunden ist.

3. Membrandruckausdehnungsgefäß nach Anspruch 2,
**dadurch gekennzeichnet,**
**dass** im umfänglichen Verbindungsbereich (4) ein Dichtelement (5a) vorgesehen ist.

4. Membrandruckausdehnungsgefäß nach Anspruch 3,
**dadurch gekennzeichnet,**
**dass** das Dichtelement von einen umlaufenden Dichtrand (5a) der Membran (5) gebildet ist.

5. Membrandruckausdehnungsgefäß nach einem oder mehreren der Ansprüche 1 bis 4,
**dadurch gekennzeichnet,**
**dass** die Membran (5) auf der dem Wasserraum (6) zugewandten Seite eine Kontur aufweist, die an die Kontur des den Wasserraum (6) begrenzenden Gefäßteiles (3) angepasst ist.

6. Membrandruckausdehnungsgefäß nach einem oder mehreren der Ansprüche 1 bis 5,
**dadurch gekennzeichnet,**
**dass** es als Flachgefäß ausgebildet ist.

7. Membrandruckausdehnungsgefäß nach Anspruch 6,
**dadurch gekennzeichnet,**
**dass** es rechteckförmig ausgebildet ist.

## Claims

1. A diaphragm pressure expansion vessel (1) which is intended to be connected to a line system, the vessel having two vessel parts (2, 3), which are connected to one another in a pressure-tight and fluid-tight manner in a peripheral connecting region (4), wherein the closed vessel interior (10) which is formed by the two vessel parts (2, 3) is separated into a water chamber (6) and a gas chamber by a diaphragm (5), wherein the water chamber (6) can be connected to the line system via a connection piece (7), wherein the diaphragm (5) is formed from an at least single-layered plastic and is designed in the form of a bubble,
**characterized in,**
**that** the gas chamber is formed by the diaphragm interior (9) and by the vessel interior (10) between that side of the diaphragm (5) which is averted from the water chamber (6) and the adjoining vessel part (2), wherein that side of the diaphragm (5) which is averted from the water chamber (6) is provided with perforations (8).

2. A diaphragm pressure expansion vessel according to claim 1,
**characterized in**
**that** the diaphragm (5) is integrated in a gas-tight manner in the peripheral connecting region (4) between the two vessel parts (2, 3).

3. A diaphragm pressure expansion vessel according to claim 2,
**characterized in**
**that** a sealing element (5a) is provided in the peripheral connecting region (4).

4. A diaphragm pressure expansion vessel according to claim 3,
**characterized in**
**that** the sealing element is formed from a circumferential sealing edge (5a) of the diaphragm (5).

5. A diaphragm pressure expansion vessel according to one or several of claims 1 to 4,
**characterized in**
**that** the diaphragm (5) on the side facing the water chamber (6) has a contour, which is adjusted to the contour of the vessel part (3) adjoining the water chamber (6).

6. A diaphragm pressure expansion vessel according to one or several of claims 1 to 5,
**characterized in**
**that** it is designed as a flat vessel.

7. A diaphragm pressure expansion vessel according to claim 6,
**characterized in**
**that** it is designed rectangularly.

## Revendications

1. Vase d'expansion à membrane (1) destiné à être raccordé à un réseau de conduites, avec deux parties de vase (2, 3) qui sont reliées l'une à l'autre de manière étanche à la pression et au fluide dans une zone de liaison périphérique (4), l'espace intérieur de vase (10) fermé, formé par les deux parties de vase (2, 3), étant séparé par une membrane (5) en un espace à eau (6) et un espace à gaz, l'espace à eau (6) pouvant être relié par l'intermédiaire d'une tubulure de raccordement (7) au réseau de conduites, la membrane (5) étant formée à partir d'un plastique au moins monocouche et étant conçue en forme de bulle,
**caractérisé en ce que** l'espace à gaz est formé par l'espace intérieur de membrane (9) et par l'espace intérieur de vase (10) entre le côté, éloigné de l'espace à eau (6), de la membrane (5) et la partie de vase (2) adjacente, le côté, éloigné de l'espace à eau (6), de la membrane (5) étant muni de perforations (8).

2. Vase d'expansion à membrane selon la revendication 1, **caractérisé en ce que** la membrane (5) est intégrée de manière étanche au gaz dans la zone de liaison périphérique (4) entre les deux parties de vase (2, 3).

3. Vase d'expansion à membrane selon la revendication 2, **caractérisé en ce qu'**un élément d'étanchéité (5a) est prévu dans la zone de liaison périphérique (4).

4. Vase d'expansion à membrane selon la revendication 3, **caractérisé en ce que** l'élément d'étanchéité est formé par un bord d'étanchéité périphérique (5a) de la membrane (5).

5. Vase d'expansion à membrane selon l'une ou plusieurs des revendications 1 à 4, **caractérisé en ce que**, du côté proche de l'espace à eau (6), la membrane (5) comporte un contour qui est adapté au contour de la partie de vase (3) délimitant l'espace à eau (6).

6. Vase d'expansion à membrane selon l'une ou plusieurs des revendications 1 à 5, **caractérisé en ce qu'**il est conçu comme un récipient plat.

7. Vase d'expansion à membrane selon la revendication 6, **caractérisé en ce qu'**il est conçu rectangulaire.
